# EUROPÄISCHE PATENTANMELDUNG

(11) **EP 4 484 766 A1**
(43) Veröffentlichungstag der Anmeldung: **01.01.2025**
(21) Anmeldenummer: 23177233.6
(22) Anmeldetag: 05.06.2023
(51) Int. Cl.: F16B 7/18, F16D 1/076, F16D 1/027, F16D 1/04, F16D 1/108

(54) **HOCHLASTVERBINDER**

(71) Anmelder: Gschweitl, Ernst Dipl.-Ing., 8200 Albersdorf-Prebuch (AT)
(72) Erfinder: Gschweitl, Ernst Dipl.-Ing., 8200 Albersdorf-Prebuch (AT)
(74) Vertreter: Weiser & Voith Patentanwälte Partnerschaft

(57) **Zusammenfassung**

Ein Hochlastverbinder (6) zum Anschluss eines Bauteils (3) an die Stirnseite (7) eines Rohres oder einer Welle (2) umfasst ein mit seinem einen Ende (13) mit der Stirnseite (7) verbindbares Rohrstück (10), das einen über seinen Umfang verteilten Satz von axialparallelen, von seinem anderen Ende (14) ausgehenden Schlitzen (16) hat, zwischen welchen somit Finger (17) verbleiben, die einen Kranz (18) bilden und durch kranzförmig angeordnete Öffnungen (9) des Bauteils (3) hindurchfädelbar sind, wobei das Rohrstück (10) im Bereich der Finger (17) mit einem Außengewinde (19) versehen ist, sowie einen Ring mit einem Innengewinde, der auf das Außengewinde des Rohrstücks (10) aufschraubbar ist.

## Beschreibung

Die vorliegende Erfindung betrifft einen Hochlastverbinder zum Anschluss eines Bauteils an die Stirnseite eines Rohres oder einer Welle.

Hochlastverbinder werden beispielsweise im Bahnbau verwendet, um die Räder eines Radsatzes mit ihrer Welle zu verbinden. Andere Anwendungen sind beispielsweise das Verbinden zweier beliebiger Wellen, einer Welle mit einem Flansch, einer Welle mit einem Motor oder einer Schiffsschraube im Schiffsbau, das Verbinden ruhender Rohre miteinander oder mit Flaschen, z.B. bei Pipelines in der Ölindustrie, usw. Solche Verbindungen müssen nicht nur enormen Kräften und Momenten widerstehen können, sondern sollen auch rasch, einfach und fehlersicher geschlossen werden können. Die Erfindung setzt sich zum Ziel, einen Hochlastverbinder zu schaffen, der diese Anforderungen erfüllt.

Dieses Ziel wird mit einem Hochlastverbinder der einleitend genannten Art erreicht, der sich erfindungsgemäß durch ein in koaxialer Lage mit seinem einen Ende mit der Stirnseite verbindbares Rohrstück auszeichnet, das einen über seinen Umfang verteilten Satz von axialparallelen, von seinem anderen Ende ausgehenden Schlitzen hat, zwischen welchen somit Finger verbleiben, die einen Kranz bilden und durch kranzförmig angeordnete Öffnungen des Bauteils hindurchfädelbar sind, wobei das Rohrstück im Bereich der Finger mit einem Außengewinde versehen ist; und einen ersten Ring mit einem Innengewinde, der auf das Außengewinde des Rohrstücks aufschraubbar ist.

Der Hochlastverbinder der Erfindung hat nur wenige Einzelteile, in der einfachsten Ausführungsform nur das Rohrstück und den ersten Ring, was die Handhabung entscheidend vereinfacht. Gleichzeitig wird durch die Vielzahl an rund um die Achse herum angeordneten, mit einem einzigen Ring gemeinsam verschraubbaren Fingern eine hochfeste Multi-Schraubverbindung erreicht. Die Finger greifen symmetrisch rund um die zentrale Achse des Rohrs bzw. der Welle an, wodurch eine gleichmäßige Krafteinleitung vom Bauteil auf das Rohr bzw. die Welle erfolgt. Anstelle einzelner Schrauben oder Muttern, die zeitaufwändig auf einzelne kranzförmig angeordnete Schrauben aufgeschraubt werden, was auch die Gefahr unterschiedlicher Anziehkräften in sich birgt, übt die gemeinsame Verschraubung aller Finger mit einem einzigen Ring eine gleiche Anziehkraft auf jeden Finger aus. Auch gibt es keine Unzahl an Verlierteilen wie bei mehrfachen Einzelverschraubungen. Im Ergebnis wird ein hochbelastbarer Verbinder für schnelle, einfache und fehlersichere Rohr- und Wellenanschlüsse geschaffen.

Hochlastverbinder im Bahn- und Schiffsbau erfordern in der Regel einen hydraulischen Gewindeanzug, weil Gewinde solcher Dimensionen nicht mehr manuell festgeschraubt werden können. Um den Angriff eines solchen hydraulischer Ziehwerkzeugs zu erleichtern, hat der erste Ring bevorzugt ein Außengewinde, sodass er mit dem Innengewinde des Ziehkolbens oder Ziehzylinders eines hydraulischen Ziehwerkzeugs verschraubt werden kann.

Eine besonders vorteilhafte Ausführungsform des Hochlastverbinders der Erfindung zeichnet sich dadurch aus, dass das Rohrstück im Bereich der Finger mit einem Innengewinde versehen ist, und dass ein zweiter Ring mit einem Außengewinde vorgesehen ist, der in das Innengewinde des Rohrstücks einschraubbar ist. Der erste Ring und der zweite Ring greifen damit radial von außen und von innen an den Fingern des Rohrstücks an. Die Finger werden dadurch bei gleichzeitigem Anziehen von erstem und zweitem Ring in axialer Richtung symmetrisch belastet, was für eine symmetrische Krafteinleitung auf die Finger bzw. vom Bauteil auf das Rohr bzw. die Welle von entscheidender Bedeutung ist und dynamische Wechselbelastungen im Betrieb, z.B. bei Wellen, minimiert.

Bevorzugt ist der zweite Ring mit einem Innengewinde ausgestattet. Das hydraulische Ziehwerkzeug zum Spannen der Verbindung kann so auch mit dem zweiten Ring verschraubt werden, um gleichzeitig den ersten und zweiten Ring zu ziehen.

Besonders günstig ist es, wenn der erste und der zweite Ring über eine Brücke starr miteinander verbunden sind. Die beiden Ringe können dadurch gemeinsam manipuliert werden, und auch das hydraulische Ziehwerkzeug kann so an einem einzigen Stück angreifen.

Die Brücke ist beispielsweise ihrerseits ringförmig, bevorzugt mit einem U-förmigen Querschnitt, der die freien Enden der Finger übergreift.

In einer ersten Variante des Hochlastverbinders der Erfindung ist das genannte eine Ende des Rohrstücks mit zumindest einem Gewinde versehen, mittels welchem es mit dem Rohr bzw. der Welle verschraubbar ist. Beispielsweise kann das Rohrstückende auf ein Außen- oder in ein Innengewinde der Rohr- bzw. Wellenstirnseite oder in eine Gewindenut in der Stirnseite geschraubt werden.

In einer zweiten Variante kann das Rohrstück mit der Stirnseite des Rohres bzw. der Welle einstückig ausgebildet sein. In dieser Variante ist zumindest der stirnseitige Abschnitt des mit dem Bauteil zu verbindenden Rohres bzw. der Welle ein Teil des Hochlastverbinders.

In allen genannten Ausführungsformen und Varianten kann der Hochlastverbinder ferner einen dritten Ring mit einem Innengewinde, der auf das Außengewinde des Rohrstücks aufschraubbar ist, und/oder einen vierten Ring mit einem Außengewinde umfassen, der in das Innengewinde des Rohrstücks einschraubbar ist. Der dritte und der vierte Ringe können dazu verwendet werden, nach dem hydraulischen Anziehen des ersten und des zweiten Rings in Richtung zum Rohr bzw. der Welle weiter auf die Finger aufgeschraubt zu werden, bis sie am Bauteil anliegen und so die hydraulisch angezogene Verbindung fixieren.

Optional kann auch der dritte Ring mit einem Außengewinde und/oder der vierte Ring mit einem Innengewinde ausgestattet sein, um ein entsprechend gewindetes Werkzeug zur Betätigung der Ringe anbringen zu können.

In einem weiteren Aspekt schafft die Erfindung einen Leichtbau-Radsatz für ein Schienenfahrzeug, der zwei über eine Welle verbundene Räder umfasst, wobei jedes Rad einen Kranz von Öffnungen hat und mittels eines Hochlastverbinders der hier offenbarten Art mit der Welle verbunden ist.

Bevorzugt ist die Welle eine Hohlwelle, was die ungefederte Masse des Radsatzes und damit den Fahrwegverschleiß entscheidend reduziert.

Besonders günstig ist es, wenn die Wandstärke des Rohrstücks jedes Hochlastverbinders etwa der Wandstärke der Hohlwelle entspricht. Dadurch wird minimales Gewicht ohne Beeinträchtigung der Festigkeit des Verbinders erzielt.

Die Erfindung wird nachfolgend anhand von in den beigeschlossenen Zeichnungen dargestellten Beispielen näher erläutert. In den Zeichnungen zeigt:
Fig. 1 einen erfindungsgemäßen Leichtbau-Radsatz in einer Seitenansicht;
Fig. 2 eines der Räder des Radsatzes von Fig. 1 in einer Stirnansicht;
die Fig. 3 und 4 eine erste Ausführungsform des erfindungsgemäßen Hochlastverbinders mit einem schematisch dargestellten Bauteil und einer ausschnittsweise dargestellten Hohlwelle in zwei verschiedenen perspektivischen Halbschnitten; und
die Fig. 5 und 6 eine zweite Ausführungsform des erfindungsgemäßen Hochlastverbinders mit einem schematisch dargestellten Bauteil und einer ausschnittsweise dargestellten Hohlwelle in zwei verschiedenen perspektivischen Halbschnitten.

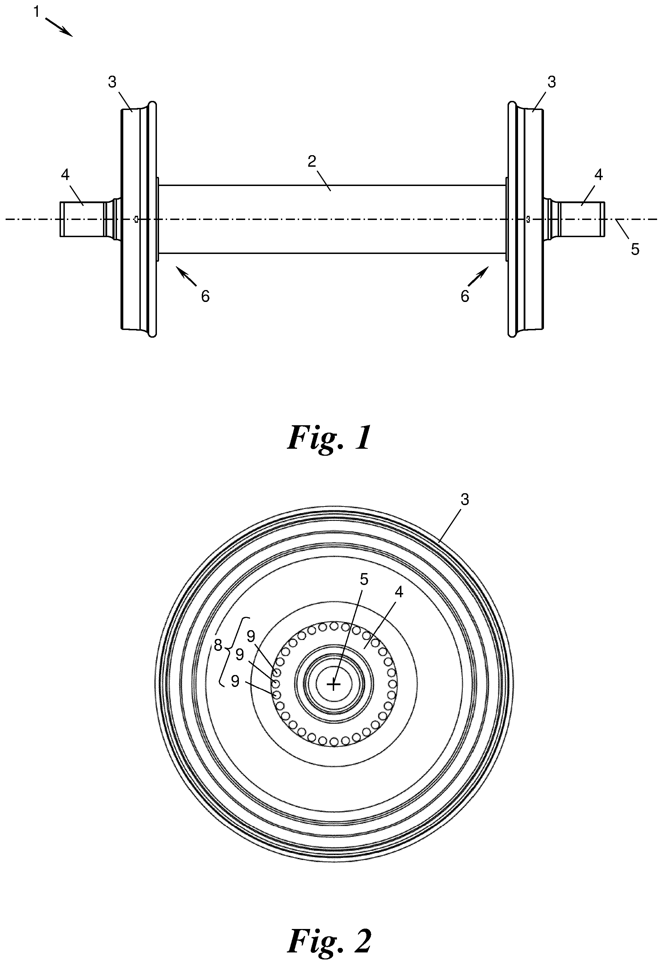

In den Fig. 1 und 2 ist ein Leichtbau-Radsatz 1 für ein Schienenfahrzeug, z.B. einen Zug oder Güterwaggon, dargestellt. Der Radsatz 1 hat zwei über eine Hohlwelle 2 verbundene Räder 3 mit Achsstummeln 4 zur Lagerung in entsprechenden radaußenseitigen Lagern (nicht gezeigt) des Schienenfahrzeugs. Die Räder 3 mit ihren Achsstummeln 4 und die Hohlwelle 2 haben eine gemeinsame zentrale Achse 5. Die Hohlwelle 2 kann von einem Motor angetrieben sein, z.B. über eine darauf sitzende Antriebsscheibe (nicht gezeigt), der Radsatz 1 also einen Treibradsatz bilden, oder antriebslos sein, der Radsatz 1 also einen Laufradsatz bilden.

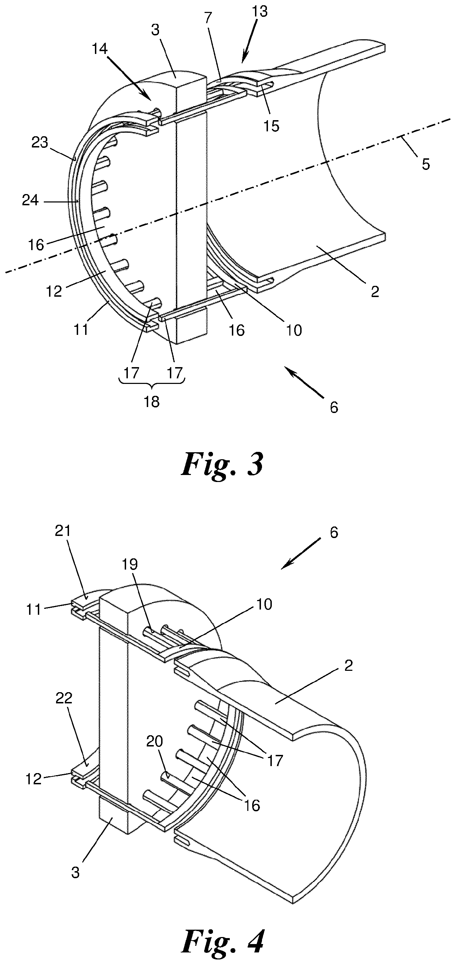

Jedes Rad 3 mitsamt seinem Achsstummel 4 ist über einen Hochlastverbinder 6 mit der jeweiligen Stirnseite 7 (Fig. 3) der Hohlwelle 2 verbunden und verfügt dazu über einen rund um die Achse 5 herum konzentrisch angeordneten Kranz 8 von Öffnungen 9, welche der Montage des jeweiligen Hochlastverbinders 6 dienen.

Die Fig. 3 und 4 zeigen eine erste Ausführungsform des Hochlastverbinders 6. Der Hochlastverbinder 6 umfasst ein koaxial zur Achse 5 angeordnetes Rohrstück 10, einen ersten Ring 11 und optional einen zweiten Ring 12. Das Rohrstück 10 hat ein erstes, der Hohlwelle 2 zugewandtes Ende 13 und ein gegenüberliegendes zweites Ende 14. Das Rohrstück 10 kann lösbar mit der Stirnseite 7 der Hohlwelle 2 verbunden sein. Beispielsweise ist das Ende 13 des Rohrstücks 10 mit einem Außen- und/oder Innengewinde in eine entsprechende Gewindenut 15 in der Stirnseite 7 der Hohlwelle 2 einschraubbar oder mit einem Außen- und/oder Innengewinde eines Absatzes der Stirnseite 7 verschraubbar.

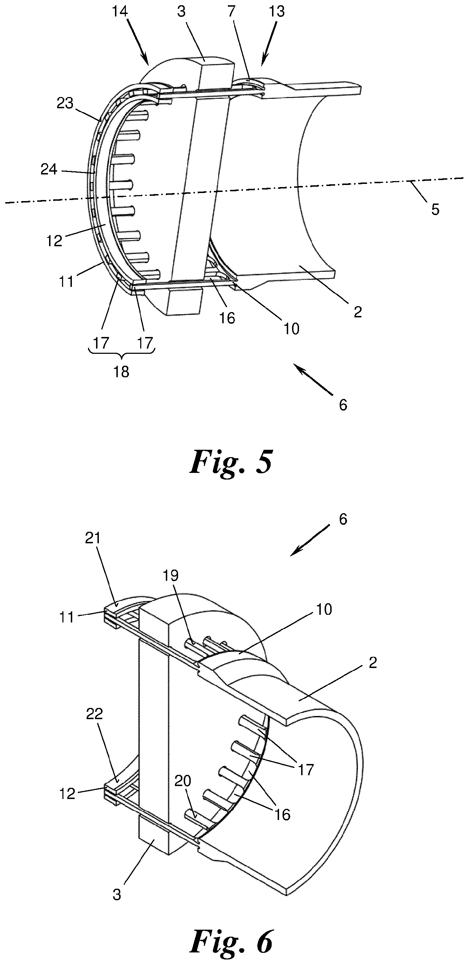

Alternativ könnte das Ende 13 des Rohrstücks 10 auch auf jede beliebige andere Weise mit der Stirnseite 7 der Hohlwelle 2 verbunden werden, beispielsweise durch Verschweißen oder Verpressen. In den Fig. 5 und 6 ist eine solche alternative Ausführungsform des Hochlastverbinders 6 dargestellt, in welcher das Ende 13 des Rohrstücks 10 einstückig mit der Stirnseite 7 der Hohlwelle 2 ausgebildet ist. In dieser Ausführungsform umfasst somit der Hochlastverbinder 6 auch (zumindest) den stirnseitigen Bereich der Hohlwelle 2.

Es versteht sich, dass anstelle der Hohlwelle 2 auch jede andere Art von Welle verwendet werden könnte, z.B. eine (Voll-) Welle usw. Wenn eine Hohlwelle 2 verwendet wird, ist die Wandstärke des Rohrstücks 10 etwa gleich der Wandstärke der Hohlwelle 2 (abgesehen von deren allfällig verdickter Wandstärke im Bereich der Stirnseite 7).

Der mit dem Rohr, der Welle bzw. (hier:) Hohlwelle 2 über den Hochlastverbinder 6 zu verbindende Bauteil, z.B. das Rad 3 mitsamt seinem Achsstummel 4, ist in den Fig. 3 - 6 nur schematisch dargestellt. Es versteht sich, dass jeder beliebige Bauteil 3, der mit einem Rohr bzw. einer (Hohl-) Welle 2 zu verbinden ist, mittels des Hochlastverbinders 6 vebunden werden kann, soferne der Bauteil 3 einen entsprechenden Kranz 8 von Öffnungen 9 hat.

Wie in den Fig. 3 - 6 gezeigt, hat das Rohrstück 10 einen über seinen Umfang verteilten Satz von axialparallelen Schlitzen 16. Die Schlitze 16 werden z.B. durch Fräsen hergestellt. Jeder Schlitz 16 geht von dem Ende 14 des Rohrstücks 10 aus und verläuft parallel zur Achse 5 über einen Teil der Axialerstreckung des Rohrstücks 10. Damit belassen die Schlitte 16 zwischeneinander einen Satz von Fingern 17, die vom Ende 13 des Rohrstücks 10 ausgehen und an dessen Ende 14 frei auskragen. Die Finger 17 bilden somit ihrerseits einen Kranz 18. Die Anzahl an Fingern 17 im Kranz 18 entspricht der Anzahl an Öffnungen 9 im Kranz 8, und der Durchmesser des Kranzes 18 entspricht dem Durchmesser des Kranzes 8. Die Finger 17 können somit in Richtung der Achse 5 durch die Öffnungen 9 hindurchgefädelt werden.

Das Rohrstück 10 ist im Bereich der Finger 17 mit einem Außengewinde 19 und (optional) mit einem Innengewinde 20 versehen. Der erste Ring 11 hat wiederum ein Innengewinde, mit dem er auf das Außengewinde 19 des Rohrstücks 10 aufgeschraubt werden kann. Der (optionale) zweite Ring 12 hat ein Außengewinde, mit dem er in das (optionale) Innengewinde 20 des Rohrstücks 10 eingeschraubt werden kann. Zum Herstellen der Verbindung mittels des Hochlastverbinders 6 wird somit zunächst das Rohrstück 10 mit seinem Ende 13 mit dem Rohr bzw. der (Hohl-) Welle 2 verbunden (soferne nicht bereits damit dauerhaft verbunden), dann werden die Finger 17 durch die Öffnungen 9 des anzuschließenden Bauteils 3 hindurchgefädelt, und anschließend wird der Ring 11 vom Ende 14 des Rohrstücks 10 her auf dieses auf- und (optional) der Ring 12 in dieses eingeschraubt. Der bzw. die Ringe 11, 12 werden so weit auf das Rohrstück 10 geschraubt, bis sie an dem Bauteil 3 anliegen.

Anstelle eines manuellen Festschraubens der Ringe 11, 12 mit einem entsprechenden Werkzeug wird bei Schwerlastanwendungen wie Radsätzen, Schiffswellen, Pipelines usw. ein hydraulischer Gewindeanzug verwendet. Dazu wird ein hydraulisches Ziehwerkzeug (nicht gezeigt) z.B. am Bauteil 3 abgestützt und zieht den bzw. die Ringe 11, 12 vom Bauteil 3 in Axialrichtung weg. In den so entstehenden Spalt zwischen den Ringen 11, 12 und dem Bauteil 3 werden dann entsprechende Unterlegscheiben, Keile usw. eingelegt, um die Verbindung in diesem angezogenen Zustand zu fixieren. Für den Hochlastverbinder 6 eignen sich als Unterlegscheiben insbesondere halbkreisförmige Rechen, die in den Spalt und zwischen die Finger 17 eingreifen.

Anstelle von Unterlegscheiben, Keilen, Rechen usw. können alternativ weitere Ringe, die genauso wie die Ringe 11, 12 ausgebildet sind, verwendet werden, also ein dritter Ring mit einem Innengewinde analog dem ersten Ring 11 und ein vierter Ring mit einem Außengewinde analog dem zweiten Ring 12. Alle vier Ringe werden zunächst mit den Fingern 17 des Rohrstücks 10 verschraubt, das hydraulische Ziehwerkzeug greift dann aber nur an den beiden außenliegenden Ringen 11, 12 an. Die beiden innenliegenden (dritten und vierten) Ringe werden dann so weit in Richtung zum Bauteil 3 weiter geschraubt, bis sie am Bauteil 3 zur Anlage kommen und so die hydraulisch angezogene Verbindung fixieren.

Für den Angriff eines hydraulischen Ziehwerkzeugs an den Ringen 11, 12 können optional der erste Ring 11 und mit einem Außengewinde 21 und/oder der zweite Ring 12 mit einem Innengewinde 22 versehen sein, sowie in gleicher Weise optional der dritte Ring mit einem Außengewinde und/oder der vierte Ring mit einem Innengewinde.

Zur leichteren Handhabung der Ringe 11, 12 beim gemeinsamen Auf- bzw. Einschrauben auf bzw. in das Rohrstück 10 bzw. die Finger 17 können die beiden Ringe 11, 12 über eine Brücke starr miteinander verbunden sein. Die Brücke verbindet beispielsweise die beiden bauteilabgewandten Stirnseiten 23, 24 der Ringe 11, 12 miteinander. Die Brücke ist z.B. eine Ringscheibe, die mit den beiden Ringen 11, 12 verschweißt ist. Die Brücke könnte auch einen U-förmigen Querschnitt haben, sodass beim Aufschrauben der Ringe 11, 12 auf die Finger 17 deren freie Enden zumindest teilweise in das U der Brücke eintauchen können.

Die Erfindung ist nicht auf die dargestellten und beschriebenen Ausführungsbeispiele beschränkt, sondern umfasst alle Varianten, Modifikationen und deren Kombinationen, die in den Rahmen der angeschlossenen Ansprüche fallen.

## Patentansprüche

1. Hochlastverbinder zum Anschluss eines Bauteils an die Stirnseite eines Rohres oder einer Welle mit zentraler Achse, **gekennzeichnet durch**
ein in koaxialer Lage mit seinem einen Ende (13) mit der Stirnseite (7) verbindbares Rohrstück (10), das einen über seinen Umfang verteilten Satz von axialparallelen, von seinem anderen Ende (14) ausgehenden Schlitzen (16) hat, zwischen welchen somit Finger (17) verbleiben, die einen Kranz (18) bilden und durch kranzförmig angeordnete Öffnungen (9) des Bauteils (3) hindurchfädelbar sind, wobei das Rohrstück (10) im Bereich der Finger (17) mit einem Außengewinde (19) versehen ist; und
einen ersten Ring (11) mit einem Innengewinde, der auf das Außengewinde (19) des Rohrstücks (10) aufschraubbar ist.

2. Hochlastverbinder nach Anspruch 1, **dadurch gekennzeichnet, dass** der erste Ring (11) mit einem Außengewinde (21) ausgestattet ist.

3. Hochlastverbinder nach Anspruch 1 oder 2, **dadurch gekennzeichnet, dass** das Rohrstück (10) im Bereich der Finger (17) mit einem Innengewinde (20) versehen ist, und dass ein zweiter Ring (12) mit einem Außengewinde vorgesehen ist, der in das Innengewinde (20) des Rohrstücks (10) einschraubbar ist.

4. Hochlastverbinder nach Anspruch 3, **dadurch gekennzeichnet, dass** der zweite Ring (12) mit einem Innengewinde (22) ausgestattet ist.

5. Hochlastverbinder nach Anspruch 3 oder 4, **dadurch gekennzeichnet, dass** der erste und der zweite Ring (11, 12) über eine Brücke starr miteinander verbunden sind.

6. Hochlastverbinder nach Anspruch 5, **dadurch gekennzeichnet, dass** die Brücke ringförmig, bevorzugt mit U-förmigem Querschnitt, ist.

7. Hochlastverbinder nach einem der Ansprüche 1 bis 6, **dadurch gekennzeichnet, dass** das genannte eine Ende (13) des Rohrstücks (10) mit zumindest einem Gewinde versehen ist, mittels welchem es mit dem Rohr bzw. der Welle (2) verschraubbar ist.

8. Hochlastverbinder nach einem der Ansprüche 1 bis 6, **dadurch gekennzeichnet, dass** das Rohrstück (10) mit der Stirnseite (7) des Rohres bzw. der Welle (2) einstückig ausgebildet ist.

9. Hochlastverbinder nach einem der Ansprüche 1 bis 8, ferner **gekennzeichnet durch** einen dritten Ring mit einem Innengewinde, der auf das Außengewinde (19) des Rohrstücks (10) aufschraubbar ist.

10. Hochlastverbinder nach Anspruch 9, **dadurch gekennzeichnet, dass** der dritte Ring mit einem Außengewinde ausgestattet ist.

11. Hochlastverbinder nach einem der Ansprüche 1 bis 10, ferner **gekennzeichnet durch** einen vierten Ring mit einem Außengewinde, der in das Innengewinde (20) des Rohrstücks (10) einschraubbar ist.

12. Hochlastverbinder nach Anspruch 11, **dadurch gekennzeichnet, dass** der vierte Ring mit einem Innengewinde ausgestattet ist.

13. Leichtbau-Radsatz für ein Schienenfahrzeug, mit zwei über eine Welle (2) verbundenen Rädern (3), wobei jedes Rad (3) einen Kranz (8) von Öffnungen (9) hat und mittels eines Hochlastverbinders (6) nach einem der Ansprüche 1 bis 12 mit der Welle (2) verbunden ist.

14. Leichtbau-Radsatz nach Anspruch 13, **dadurch gekennzeichnet, dass** die Welle (2) eine Hohlwelle ist.

15. Leichtbau-Radsatz nach Anspruch 13 oder 14, **dadurch gekennzeichnet, dass** die Wandstärke des Rohrstücks (10) jedes Hochlastverbinders (6) etwa der Wandstärke der Hohlwelle (2) entspricht.
